# EUROPEAN PATENT SPECIFICATION

(11) **EP 4 269 512 B1**
(45) Date of publication and mention of the grant of the patent: **12.03.2025**
(21) Application number: 22305635.9
(22) Date of filing: 28.04.2022
(51) Int. Cl.: C09D 11/108, C09D 11/106, C09D 11/037, C09D 11/322, C09D 11/38, B33Y 70/00

(54) **DIELECTRIC COMPOSITE COMPOSITION FOR 3D PRINTING**
DIELEKTRISCHE VERBUNDSTOFFZUSAMMENSETZUNG FÜR DEN 3D-DRUCK
COMPOSITION COMPOSITE DIÉLECTRIQUE POUR IMPRESSION 3D

(43) Date of publication of application: 01.11.2023
(73) Proprietor: Nanoe, 91160 Ballainvilliers (FR)
(72) Inventor: MALVAUX, Tom, 91160 Ballainvilliers (FR); SOURICE, Julien, 91160 Ballainvilliers (FR); BOUCHET-DOUMENQ, Guillaume, 91160 Ballainvilliers (FR)
(74) Representative: Icosa

(56) References cited:
- WO-A1-2019/028201
- WO-A1-2022/010623
- US-A1- 2019 322 884

## Description

### FIELD OF INVENTION

The present invention relates to a composite composition, in particular a composition that can be shaped into a dielectric filament suitable for 3D printing. The invention also relates to the uses of said composite composition as well as the filament and a shaped object comprising the composition according to the invention.

### BACKGROUND OF INVENTION

Three-dimensional (3D) printing technology is a recent manufacturing technology, also known as additive manufacturing (AM), which takes layered manufacturing as the forming principle allowing the productions of objects with complex geometric shapes and that have the potential of integrating advanced technologies.

The technology of additive manufacturing, or 3D printing technology, has become the most popular advanced technology in the world in recent years. The recent advances in the field, has allowed 3D printing the scaling up from laboratory scale to mass use and as well as the variation of the 3D-printed objects from every-day use articles to sophisticated high frequency applications. With the rapid development of the digital industry, the demand for materials with ideal dielectric properties is continuously growing.

The fused deposition modelling (FDM) process is a very helpful 3D-printing technique for manufacturing all kind of shaped objects. In addition, FDM is considered as an affordable and precise method for 3D printing.

Generally, FDM works by laying down material in layers. In FDM, the model (or part of it) is produced by extruding small beads or streams of material which harden immediately to form layers. In this technique, a filament of thermoplastic material is fed into an extrusion nozzle head (3D printer extruder). The extruder heats the material that can be further heated by the extruder nozzle head that regulates the heated material flow by turning the flow on and off. Typically, stepper motors or servo motors are employed to move the extrusion head and adjust the flow. The printer usually has 3 axes of motion.

High frequency applications, such as antenna components, require polymeric materials of high electrical permittivity and of low tangent loss. To the Applicant's knowledge, no high permittivity and low dielectric loss printable filaments have been reported in the market.

Wu et al. disclose a composite Filament with High Dielectric Permittivity (Yingwei Wuet al., "Fabrication of Composite Filaments with High Dielectric Permittivity for Fused Deposition 3D Printing," Journal Materials 2017). However, the disclosed composite materials present an elevated dielectric loss of at least 2.05 10⁻² and a heat resistance of only up to 105°C.

Goulas et al. disclose a BaSrTiO₃ based composite material of high permittivity and a dielectric loss of 0.007 without considering the printing properties of such material (Goulas et al., Synthesis and dielectric characterisation of a low loss BaSrTiO₃/ABS ceramic/polymer composite for fused filament fabrication additive manufacturing, Additive Manufacturing, Vol.55, 2022). Additionally, WO 2019/028201, US 2019/322884 and WO 2022/010623 might be cited as prior art documents.

It is therefore understood that composite compositions suitable for 3D printing in the field of high frequency applications need to address simultaneously the needs of high frequency components as well as the prerequisites of materials suitable for 3D printing. In other terms, there is a need to supply composite compositions presenting high permittivity and low dielectrics losses at high frequencies (i.e. higher than 1 GHz) and be able to maintain these properties up to temperature higher than 100°C.

In order to ensure the desired electric properties, dielectric composite materials to be 3D-printed into components for high frequency applications must be thermoplastic materials that offer elevated charge capacity with a dielectric filler without losing the ability to be able to be handled under the FDM extrusion conditions, to have sufficient heat stability during extrusion, to be elastic enough once extruded into the form of a filament, advantageously a non-porous filament with constant diameter, and to present the necessary mechanical properties once the filament is printed.

In view of the above, there is a need for compositions that are suitable for 3D printing into shaped high-frequency objects and that are compliant with both the prerequisites for 3D printing and the prerequisites for high-frequency applications.

The Applicant has developed a composition suitable for 3D printing, as hereinafter described, and that is suitable for printing elements for high frequency applications and that is compliant with the hereinabove discussed prerequisites. Advantageously, the constituents of the present composition are economic and readily available in the market.

### DEFINITIONS

In the present invention, the following terms have the following meanings:

**"About":** preceding a figure means plus or less 10% of the value of said figure. According to one embodiment, the term "about" preceding a figure means plus or less 5% of the value of said figure; preferably plus or less 1% of the value of said figure.

**"3D-printing"** or **"additive manufacturing":** refers to any process for manufacturing three-dimensional solid objects from a digital file. According to some embodiments 3D-printing refers to Fused Filament Fabrication (FFF) or Fused filament deposition (FDM).

**"Composite"** refers to a material that is produced from at least two or more constituent materials. The constituent materials have notably dissimilar chemical or physical properties and are merged to create a material with properties unlike the individual elements. Within the finished composite structure, the individual elements remain separate and distinct, distinguishing composites from mixtures and solid solutions.

**"Dielectric"** refers to a material that that can be polarised by an applied electric field. Thus, dielectric materials present high polarizability, that can be expressed by their relative permittivity. Advantageous dielectric materials according to the invention present a low dielectric relaxation delay or lag, i.e a low relaxation response of the dielectric material to an external, oscillating electric field. The dielectric relaxation delay or dielectric loss can be expressed by the loss of tangent. Dielectric properties can be determined by any method known in the art. In some embodiments, the dielectric properties are measured with the rectangular waveguide cavity method. Unless otherwise specified, the dielectric properties are measured with the rectangular waveguide cavity method at frequency of 9.4 GHz. Typically, the measurements are carried out on samples of more than 15 mm in length presenting a diameter of less than 2.75 mm or a cross-section of less than 1.95 mm

**"Elastomer"** refers to a dimensionally stable plastic which can typically be elastically deformed at room temperature.

**"Filament":** In the present description filament designates a 3D printer feeding form or **feedstock composition** that has the shape of a fine wire. Equivalent and interchangeable 3D printing feeding forms may be selected from at least one bullion, at least one rod or stick, at least one pellet or granule. A person skilled in the art can easily determine the form of the 3D printing material, depending on the type of the 3D printer used.

**"Fused Deposition Modeling (FDM)"** refers to an additive manufacturing (AM) process in which a physical object is created directly from a computer-aided design (CAD) model using layer-by-layer deposition of a feedstock plastic filament material extruded through a nozzle.

**"Polymers"** refers to materials comprising or consisting of macromolecular chains composed of many repeated subunits. According to the present invention, the term "polymers" includes "copolymers" and "homopolymers". **"Copolymer"** refers to any macromolecular chain having at least two different repeating units; copolymers can be alternating, periodic, statistical, random or block copolymers. **"Homopolymer"** refers to any macromolecular chain having only one single type of repeating unit. **"Block polymers"** are made up of blocks of different polymerized monomers, wherein a block designates a portion of the polymer, that has at least one feature which is not present in the adjacent portions.

**"Room temperature"** refers to a temperature ranging from 20°C to 30°C, more preferably is about 25°C.

**"Thermoplastic"** refers to a material which is capable of being repeatedly softened by heating and hardened by cooling. A thermoplastic polymer can be plastically deformed by heating if the temperature reached by heating lies within a material-specific temperature range. Up to a material-specific upper limit, a thermoplastic can be reversibly heated and cooled without thermal decomposition taking place. According to one embodiment, the thermoplastic polymer or elastomer is soft at room temperature. According to one embodiment, the thermoplastic compound is soft at a temperature ranging from 20°C to 200°C.

**Styrenic block copolymers** refer to thermoplastic heteropolymer elastomers. Any of the styrenic block copolymers known in the art may be utilized in the present invention. Typically, such block copolymers comprise one or more (preferably, two or more) styrenic blocks (i.e., blocks of one or more vinyl aromatic monomers in polymerized form) which are relatively "hard" and one or more blocks which are relatively "soft", such as blocks of polymerized dienes such as butadiene or isoprene or blocks of hydrogenated polymerized dienes (which, in the case of butadiene may be referred to as ethylene-ran-butylene blocks).

### DETAILED DESCRIPTION

According to a first aspect the invention relates to a composition suitable for 3D printing, said composition comprising a cyclic Olefin Copolymer (COC), at least one (further) thermoplastic elastomer, and a dielectric inorganic filler composition in an amount of more than 30% in weight relative to the composition.

The at least one further thermoplastic elastomer can typically be selected from styrenic block copolymers, thermoplastic polyamide; copolyamide; polyolefins, preferably alpha-olefins, such as butyl rubber or polybutene; poly(meth)acrylates; polystyrene; thermoplastic polyurethane; polyesters; ethylene copolymers; ethylene vinyl copolymers; styrenic block copolymer, polylactic acid (PLA), low density polyethylene (LDPE) and linear low-density polyethylene (LLDPE), polypropylene (PP), and polymethyl pentene (PMP), and fluoropolymers such as fluorinated ethylene propylene copolymer (EFEP).

In some embodiments, the at least one thermoplastic elastomer is at least one styrenic block copolymer.

Accordingly, the composition suitable for 3D printing, comprises a cyclic Olefin Copolymer (COC), at least one styrenic block copolymer, and a dielectric inorganic filler composition in an amount of more than 30% in weight relative to the composition.

It is understood that the present composition and the products comprising said composition can also qualify as composite compositions. Indeed, the composition of the present invention, it's extruded form as a filament, and the 3D printed shaped objects can be considered as composite materials, wherein the first constituent is at least one polymeric phase, also designated as binder or matrix, and at least one inorganic phase (filler composition) incorporated in the at least one polymeric phase. In one embodiment, the polymeric phase comprises a continuous phase of a cyclic Olefin Copolymer (COC) and a discontinuous phase of at least one thermoplastic elastomer, typically a styrenic block copolymer.

According to some embodiments, the composition is in the form of a composite composition, a composite filament, composite bullion, at least one composite rod or stick, at least one pellet or granule. As set forth in the present specification, the composition may be shaped or printed in order to form a shaped object.

Advantageously, the composite composition presents a dielectric permittivity (εᵣ) of more than 7.0, of more than 7.5, of more than 8.0, of more than 8.5, of more than 9.0, or of more than 9.5 in the frequency range of 10 to 50 GHz; and/or presents a dielectric loss, or loss of tangent, (tgδ) of less or equal to 0.02, of less or equal to 0.01, of less or equal to 0.005, or of less or equal to 0.001 in the frequency range of 10 to 50 GHz. In some embodiments, the composite composition presents a dielectric permittivity (εᵣ) ranging from 7.0 to 11.0 in the frequency range of 10 to 50 GHz; and/or presents a dielectric loss, or loss of tangent, (tgδ) of less or equal 0.01, of less or equal to 0.005, or of less or equal to 0.001 in the frequency range of 10 to 50 GHz. In some embodiments, the composite composition comprises more than 70%, more than 75%, or about 80% charge in dielectric inorganic filler composition and presents a dielectric permittivity (εᵣ) ranging from 7.0 to 11.0 in the frequency range of 10 to 50 GHz. Advantageously, such composition presents a dielectric loss, or loss of tangent, (tgδ) of less or equal 0.01, of less or equal to 0.005, or of less or equal to 0.001 in the frequency range of 10 to 50 GHz.

Advantageously, the composite composition presents Heat deflection temperature (HDT) of more than 80°C, of more than 90°C, of more than 95°C, or of more than 100°C. HDT can be determined with any method known in the art such as for examples according to the norms ISO 306, ASTM D 1525, ISO 75 or ASTM D 648. Typically, HDT is determined according to method B comprising conditioning a sample (thickness about 4.00 mm, width about 10.00 mm and length 80.00 mm) for 300 seconds at 23°C and a humidity of 50%, then applying a force of 0.45 mPa to the conditioned sample while applying a heating ramp of 120°C per hour. In some embodiments, HDT is measured using HDT VICAT^{®} apparatus by INSTRON^{®}.

### Dielectric inorganic filler composition

The composite composition of the invention comprises a dielectric inorganic filler composition in an amount of more than 30%, more than 35%, more than 40%, more than 45%, more than 50% more than 60%, more than 65%, more than 70%, more than 75%, in weight relative to the composite composition. According to some embodiments, the composite composition comprises more than 65%, more than 70%, more than 75%, in weight relative to the composite composition of a dielectric inorganic filler composition.

According to some embodiments, the composite composition of the invention comprises a dielectric inorganic filler composition in an amount ranging from 30% to 85%, from 40% to 85%, from 50% to 85%, from 60% to 85%, preferably from 65% to 85% in weight relative to the composite composition. According one embodiment, the composite composition of the invention comprises a dielectric inorganic filler composition in an amount ranging from 50% to 80%, from 60% to 80%, typically from 65% to 80%, in weight relative to the composite composition. According one embodiment, the composite composition of the invention comprises a dielectric inorganic filler composition in an amount ranging from 50% to 75%, from 60% to 75%, typically from 65% to 75%, in weight relative to the composite composition.

According to some embodiments, the dielectric inorganic filler composition is sieved in order to exclude particles whose average diameter exceeds 250 µm, preferably whose average diameter exceeds 100 µm, even more preferably whose average diameter exceeds 80 µm. Such step may be necessary in order to avoid the blocking of the extrusion nozzles of standard extrusion equipment. Thus, the upper range of the particles' size distribution can be determined by sieving, such as for example by sieving with 100 µm or 80 µm sieves. The analysis of the particles' size distribution can be carried out by the sieving analysis method by applying several sieves of different sieve openings in a sample. Alternatively, the particles' size distribution can be determined by laser diffraction analysis.

In some embodiments, the composite composition of the invention comprises a dielectric inorganic filler is in the form of a powder composition wherein the particles of the dielectric inorganic filler present an average diameter ranging from 10 nm to less than 100 µm, from 15 nm to 80 µm, from 20 nm to 80 µm or from 20 nm to 80 µm. According to a first embodiment, the particles of the dielectric inorganic filler present an average diameter ranging from 1 µm to 60 µm, from 1 µm to 50 µm. According to a second embodiment, the particles of the dielectric inorganic filler present an average diameter ranging from 5 µm to 70 µm, from 10 µm to 60 µm, from 20 µm to 50 µm, or from 30 µm to 50 µm. According to a second embodiment, the particles of the dielectric inorganic filler present an average diameter ranging from 1 µm to 20 µm, from 5 µm to 12 µm or from 10 µm to 20 µm. In one particular embodiment, the particles of the dielectric inorganic filler present an average diameter ranging from 20 µm to 50 µm. It is understood that particles presenting a microscale average diameter may also be referred to as microspheres.

According to some embodiments, the particles of the dielectric inorganic filler present a bimodal particle size distribution. In some embodiments, the first mode of the average particle size ranges from 1 µm to 15 µm and the second mode of the average particle size ranges from 20 µm to 50 µm

In some embodiments, the composite composition of the invention comprises a dielectric inorganic filler is in the form of microspheres. The microspheres may be full microspheres, hollow microspheres, or multiparticulate spheres. According to an exemplary embodiment, microspheres may be obtained by spray-drying the particles of the dielectric inorganic filler to the desired microsphere size.

The dielectric inorganic filler composition may comprise or essentially consist of an inorganic material selected from TiO₂, rutile TiO₂, BaₓSr₁₋ₓTiO₃, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ TiO₂Al₃Mg₃B₅₆, (AlN)ₓ.(Al₂O₃)₁₋ₓ, BeO, Bi₂Sr₂Caₙ₋₁CuₙO₂ₙ₊₄₊ₓ, Bi₁₂TiO₂₀, Bi₄Ti₃O₁₂, Bi₂Ti₂O₇, BN, 3CaO.Al₂O₃, 12CaO.7Al₂O₃, CaO-Al₂O₃, CaO.2Al₂O₃, CaO.6Al₂O₃, CeB₆, Dy₂Ti₂O₇, GeO₂, HfB₂, Ga₅La₃O₁₄Si, LaB₆, La₁₋ₓSrₓMnO₃, LaYbO₃, Pb(ScₓTa₁₋ₓ)O₃, Pb(ZrₓTi₁₋ₓ)O₃, MgB₂, MgO, MoSi₂, NbB₂, SiB₃, SiB₄, SiB₆, SiC, SiO₂, Si₃N₄, Si₂N₂O, Na_{0.5}Bi_{0.5}TiO₃, WSi₂, W₂N, WN, WN₂, YBa₂Cu₃O₇, ZnO, ZrO₂, and ZnZrO₃, polymorphs thereof and mixtures thereof, wherein x, n = 0 to 1.

According to some embodiments, the dielectric inorganic filler composition comprises or essentially consists of an inorganic material selected from TiO₂, rutile TiO₂, SrTiO₃, BaTiO₃, BaSrTiO₃,Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ polymorphs thereof and mixtures thereof. In some embodiments, the dielectric inorganic filler composition comprises or essentially consists of an inorganic material selected from TiO₂, BaSrTiO_{z}, polymorphs thereof and mixtures thereof, wherein z ranges from 2 to 3. In some embodiments, the dielectric inorganic filler composition comprises or essentially consists of an inorganic material selected from rutile TiO₂, SrTiO₃, BaSrTiO₃ and BaTiO₃.In some embodiments, the dielectric inorganic filler composition comprises or essentially consists of an inorganic material selected from rutile TiO₂, SrTiO₃ and BaTiO₃. In some embodiments, the dielectric inorganic filler composition comprises or essentially consists of an inorganic material selected from rutile TiO₂, SrTiO_{z}, wherein z ranges from 2 to 3. In some embodiments, the dielectric inorganic filler composition comprises or essentially consists of an inorganic material selected from SrTiO_{z}, wherein z ranges from 2 to 3. In some embodiments, the dielectric inorganic filler composition comprises or essentially consists of SrTiO₃. In some embodiments, the dielectric inorganic filler composition comprises or essentially consists of SrTiO₂.

According to a specific embodiment, the dielectric inorganic filler composition comprises or essentially consists of TiO₂ polymorphs thereof and mixtures thereof. According to a specific embodiment, the dielectric inorganic filler composition comprises or essentially consists of rutile TiO₂.

According to a first variant, the dielectric inorganic filler composition comprises at least 50%, at least 60% or at least 70% of rutile TiO₂ per weight of the inorganic filler composition. According to a second variant, the dielectric inorganic filler composition essentially consists of rutile TiO₂. According to such variant, the dielectric inorganic filler composition consists of at least 95%, or preferably at least 99% of rutile TiO₂. According to a third variant, the dielectric inorganic filler composition consists of rutile TiO₂.

The dielectric inorganic filler composition may be commercially available and used as such or it can be pretreated prior to its incorporation in the composite composition of the invention. For example, the dielectric inorganic filler composition may be subjected to a pretreatment in order to obtain a specific polymorph of the inorganic filler. For instance, TiO₂ may be subjected to any thermal treatment known in the art, such as calcination or sintering, in order to obtain an inorganic filler composition consisting of rutile TiO₂. According to a specific embodiment, commercially available TiO₂ particles comprising a mixture of anatase/rutile TiO₂ particles, such as for example P25 commercially available compositions, such as Aeroxide^{®} (Safic-Alcan) are subjected to sintering by applying a temperature gradient of 900°C to 1100°C.

According to a yet specific embodiment, the SrTiO_{z} or the TiO₂ particles, preferably the rutile TiO₂ particles, are spray-dried to form microspheres presenting an average diameter ranging from 20 to 50 µm, sintered by applying a temperature gradient of 900°C to 1100°C, and sieved in order to exclude any microspheres or microsphere aggregates of more than 100 µm.

The spray-drying step may comprise mixing the, the SrTiO_{z} or the TiO₂ particles, preferably the rutile TiO₂ particles, with water, typically at particles'/water ratio of 1/10 and optionally at least one binder composition. Any binder composition suitable for inorganic material spray-drying can be applied. In some exemplary embodiments, the binder composition comprises about 0.5 wt.% in water of an alkali-free anionic polyelectrolyte. In some exemplary embodiments, the binder composition is an alkali-free anionic polyelectrolyte consisting of 30 wt% of ammonium salt of polymethacrylic acid aqueous solution. In some exemplary embodiments, the binder composition is Dolapix^{®} CE64. In some exemplary embodiments, the binder composition may further comprise 1 wt% of polyvinyl alcohol.

According to one embodiment, sintering includes heating the inorganic filler at 150°C for 5 hours, further raising the temperature at a rate of 200°C/hour up to 900°C, maintaining the temperature at 900°C for 10h and cooling to room temperature.

### Cyclic Olefin Copolymer

The composite composition of the invention comprises at least one Cyclic Olefin Copolymer (COC). Cyclic Olefin Copolymers are thermoplastic copolymers that are typically used in a wide variety of applications including packaging films, lenses, vials, displays, and medical devices.

The composite composition of the invention comprises at least one COC in an amount ranging 5 to 60 %, from 10 to 50 %, from 10 to 35 %, or from 15 to 20% in weight relative to the composite composition.

In some embodiments, the at least one COC is a copolymer of C2 to C12 linear or branched alpha-olefins with a cyclic olefin. In some embodiments, the at least one Cyclic Olefin Copolymer is a random copolymer of C2 to C12 linear or branched alpha-olefins with a cyclic olefin.

The C2 to C12 linear or branched alpha-olefins can be selected from ethylene, propylene, butene, pentene, hexene, heptene, octene, nonene, decene, undecene, dodecene and isomers thereof. Typically, the C2 to C12 alpha-olefin is ethylene or propylene, preferably the C2 to C12 alpha-olefin is ethylene.

The cyclic olefin can be selected from norbornene, norbornadiene, dicyclopentadiene, cyclopentene, cycloheptene, cyclooctene, cyclooctadiene, cyclododecene, 7-oxanorbomene, 7-oxanorbomadiene, substituted derivatives thereof, and isomers thereof, such as 1,5-cyclooctadiene, 1-hydroxy-4-cyclooctene, 1-acetoxy-4-cyclooctene, 5-methylcyclopentene. In some embodiments, the cyclic olefin is selected from norbornene, norbornadiene, dicyclopentadiene, cyclopentene, cycloheptene, cyclooctene, cyclooctadiene, cyclododecene, 7-oxanorbomene, and 7-oxanorbomadiene. In some embodiments, the cyclic olefin is selected from 1,5-cyclooctadiene, 1-hydroxy-4-cyclooctene, 1-acetoxy-4-cyclooctene, and 5-methylcyclopentene. In some embodiments, the cyclic olefin is selected from norbornene, norbornadiene, and dicyclopentadiene. According to one embodiment, the cyclic olefin is norbornene.

In some embodiments, the COC presents a cyclic olefin content (cyclic olefin derived units) ranging from 40, or 45, or 50, or 55, or 60, or 65, or 70 wt% to 80, or 85, or 90 wt%, by weight of the COC composition.

According to some embodiments, the COC present a glass transition temperature ranging from 100°C to 250°C, preferably from 110°C to 220°C. Glass transition" as used herein refers to a reversible transition in an amorphous or semi-crystalline material from a harder, more brittle state to a viscous or more rubbery state as temperature increases. "Glass transition temperature," meanwhile, refers to the range of temperatures over which this transition occurs.

According to some embodiments, the COC is a copolymer of norbornene with ethylene, i.e. poly-ethylene-norbornene. In some embodiments, the COC is a copolymer poly-ethylene-norbornene.

Typically, poly-ethylene-norbornene copolymers present a glass transition temperature ranging from 130°C to 210°C. In some embodiments, poly-ethylene-norbornene copolymers present a glass transition temperature ranging from 130°C to 180°C.

According to some embodiments, the COC is poly-ethylene-norbornene commercialized by TOPAS^{®} such as TOPAS^{®}5013L-10 or TOPAS^{®} 6017S-04.

### Styrenic block copolymer

The composite composition of the invention comprises at one least styrenic block copolymer in an amount ranging 2 to 35 %, from 5 to 35 %, from 5 to 25 %, or from 5 to 15% in weight relative to the composite composition.

Suitable styrenic block copolymers include linear as well as radial, star, or branched, preferably linear styrenic block copolymers as well as gradient or tapered styrenic block copolymers.

According to certain embodiments, the at least one styrenic block copolymer corresponds to the general structure A-(B-A)ₙ- B-A, where A is a styrenic block (e.g., a block of polystyrene) and B is a "soft" block (e.g., polymerized butadiene, polymerized isoprene, an ethylene-ran-butylene block), and n is an integer of 0-6. As is well known is the art, the composition of each block, the number of blocks, the arrangement of the blocks relative to each other, the molecular weight of each block, and the overall molecular weight of the styrenic block copolymer may be selected and tailored in order to fulfill the performance requirements which may be required or desired for a particular end-use application.

In some embodiments, the composite composition comprises at least one styrenic block copolymer selected from styrene-ethylene-butadiene-styrene (SEBS), styrene-butadiene (SB), styrene-isoprene (SI), styrene-isoprene-styrene (SIS), styrene-butadiene-styrene (SBS), styrene-isoprene-butadiene (SIB), or styrene-isoprene-butadiene-styrene (SIBS) styrene-ethylene-propylene-styrene block copolymer (SEPS) and mixtures thereof.

In some embodiments, the composite composition comprises at least one styrenic block copolymer elastomer is styrene-ethylene-butadiene-styrene (SEBS). In one embodiment, the styrene-ethylene-butadiene-styrene is SCONA^{®} TSKD 9103.

In some embodiments, the composite composition comprises at least one styrenic block copolymer, such as SEBS, is dispersed in the COC in the form of microspheres. In one embodiment, the styrenic block copolymer microspheres present an average diameter ranging from 0.5 µm to 10 µm, or from 1.5 µm to 8.5 µm.

According to some embodiments, the composite composition comprises or consists of:
- at least 60%, preferably at least 70% of a dielectric inorganic filler composition, as defined herein above, in an amount ranging, in weight relative to the composite composition
- at least one COC, as defined herein above, in an amount ranging from 10 to 35 %, or from 15 to 20% in weight relative to the composite composition;
- at one least one (further) thermoplastic elastomer, preferably at least one styrenic block copolymer, as defined herein above, in an amount ranging from 5 to 25 %, or from 5 to 15% in weight relative to the composite composition.

According to some embodiments, the composite composition comprises or consists of:
- a dielectric inorganic filler composition, as defined herein above, in an amount ranging from 65% to 75%, in weight relative to the composite composition
- at least one COC, as defined herein above, in an amount ranging from 15 to 20% in weight relative to the composite composition;
- at one least one (further) thermoplastic elastomer, preferably at least one styrenic block copolymer, as defined herein above, in an amount ranging from 5 to 15% in weight relative to the composite composition.

According to some embodiments, the composite composition comprises or consists of:
- at least 60%, preferably at least 70% of a dielectric inorganic filler composition, as defined herein above, in an amount ranging, in weight relative to the composite composition
- poly-ethylene-norbornene in an amount ranging from 10 to 35 %, or from 15 to 20% in weight relative to the composite composition;
- styrene-ethylene-butadiene-styrene, in an amount ranging from 5 to 25 %, or from 5 to 15% in weight relative to the composite composition.

According to some embodiments, the composite composition comprises or consists of:
- a dielectric inorganic filler composition, as defined herein above, in an amount ranging from 65% to 75%, in weight relative to the composite composition
- poly-ethylene-norbornene in an amount ranging from 15 to 20% in weight relative to the composite composition;
- styrene-ethylene-butadiene-styrene in an amount ranging from 5 to 15% in weight relative to the composite composition.

According to some embodiments, the composite composition comprises or consists of:
- at least 60%, preferably at least 70% of a dielectric inorganic filler composition, as defined herein above, typically rutile TiO₂ or SrTiO_{z}, wherein z ranges from 2 to 3, in an amount ranging, in weight relative to the composite composition
- poly-ethylene-norbornene in an amount ranging from 10 to 35 %, or from 15 to 20% in weight relative to the composite composition;
- styrene-ethylene-butadiene-styrene, in an amount ranging from 5 to 25 %, or from 5 to 15% in weight relative to the composite composition.

According to some embodiments, the composite composition comprises or consists of:
- at least 60%, preferably at least 70% of a dielectric inorganic filler composition of rutile TiO₂, in an amount ranging, in weight relative to the composite composition
- poly-ethylene-norbornene in an amount ranging from 10 to 35 %, or from 15 to 20% in weight relative to the composite composition;
- styrene-ethylene-butadiene-styrene, in an amount ranging from 5 to 25 %, or from 5 to 15% in weight relative to the composite composition.

According to some embodiments, the composite composition comprises or consists of:
- a dielectric inorganic filler composition of rutile TiO₂ or SrTiO₃, in an amount ranging from 65% to 75%, in weight relative to the composite composition
- poly-ethylene-norbornene in an amount ranging from 15 to 20% in weight relative to the composite composition;
- styrene-ethylene-butadiene-styrene in an amount ranging from 5 to 15% in weight relative to the composite composition.

According to some embodiments, the composite composition comprises or consists of:
- a dielectric inorganic filler composition of rutile TiO₂, in an amount ranging from 65% to 75%, in weight relative to the composite composition
- poly-ethylene-norbornene in an amount ranging from 15 to 20% in weight relative to the composite composition;
- styrene-ethylene-butadiene-styrene in an amount ranging from 5 to 15% in weight relative to the composite composition.

According to some embodiments, the composite composition comprises or consists of:
- at least 60%, preferably at least 70% of a dielectric inorganic filler composition of microspheres of rutile TiO₂ or SrTiO_{z}, wherein z ranges from 2 to 3, typically of rutile TiO₂ or SrTiO₃, said microspheres presenting an average diameter ranging from 20 to 50 µm, in an amount ranging, in weight relative to the composite composition
- poly-ethylene-norbornene in an amount ranging from 10 to 35 %, or from 15 to 20% in weight relative to the composite composition;
- styrene-ethylene-butadiene-styrene, in an amount ranging from 5 to 25 %, or from 5 to 15% in weight relative to the composite composition.

According to some embodiments, the composite composition comprises or consists of:
- at least 60%, preferably at least 70% of a dielectric inorganic filler composition of rutile TiO₂ microspheres presenting an average diameter ranging from 20 to 50 µm, in an amount ranging, in weight relative to the composite composition
- poly-ethylene-norbornene in an amount ranging from 10 to 35 %, or from 15 to 20% in weight relative to the composite composition;
- styrene-ethylene-butadiene-styrene, in an amount ranging from 5 to 25 %, or from 5 to 15% in weight relative to the composite composition.

According to some embodiments, the composite composition comprises or consists of:
- a dielectric inorganic filler composition of rutile TiO₂ or SrTiO₃ microspheres presenting an average diameter ranging from 20 to 50 µm, in an amount ranging from 65% to 75%, in weight relative to the composite composition
- poly-ethylene-norbornene in an amount ranging from 15 to 20% in weight relative to the composite composition;
- styrene-ethylene-butadiene-styrene in an amount ranging from 5 to 15% in weight relative to the composite composition.

According to some embodiments, the composite composition comprises or consists of:
- a dielectric inorganic filler composition of rutile TiO₂ microspheres presenting an average diameter ranging from 20 to 50 µm, in an amount ranging from 65% to 75%, in weight relative to the composite composition
- poly-ethylene-norbornene in an amount ranging from 15 to 20% in weight relative to the composite composition;
- styrene-ethylene-butadiene-styrene in an amount ranging from 5 to 15% in weight relative to the composite composition.

According to some embodiments, the mass ratio of the cyclic olefin copolymer (COC), such as the poly-ethylene-norbornene, to the at least one thermoplastic elastomer, such as the styrenic block copolymer, typically styrene-ethylene-butadiene-styrene ranges from 2:1 to 1:1. In some embodiments, the mass ratio of COC, such as the poly-ethylene-norbornene, to the at least one thermoplastic elastomer, such as the styrene-ethylene-butadiene-styrene ranges is about 2:1. In some embodiments, the mass ratio of the COC, such as the poly-ethylene-norbornene, to the at least one thermoplastic elastomer, such as the styrene-ethylene-butadiene-styrene ranges is about 1:1.

### Method for preparing the composite composition

The composite composition can be prepared by any mixing means known in the art.

According to some embodiments, the method for preparing the composite composition comprises the steps of:
i) Supplying a dielectric inorganic filler composition,
ii) mixing the COC, preferably poly-ethylene-norbornene, and the to the at least one thermoplastic elastomer, typically at least one styrenic block copolymer, preferably styrene-ethylene-butadiene-styrene,
iii) heating the mix obtained in step ii), and
iv) Dispersing the dielectric inorganic filler composition into the heated mix of step ii) leading to the composite composition.

In some embodiments, step i) may comprise: spray-drying the particles of the dielectric inorganic filler to the desired microsphere size, typically of an average diameter ranging from 5 µm to 70 µm, from 10 µm to 60 µm, from 20 µm to 50 µm, preferably from 20 µm to 50 µm, optionally drying the microspheres, optionally calcinating or sintering the microspheres as described herein above, optionally sieving the microspheres in order to exclude any microspheres or microsphere aggregates of more than 100 µm.

Steps ii) -iv) may be carried out into a sigma-blade blender.

In some embodiments, step iii) may comprise heating the mix obtained in step ii) at a temperature ranging from 190°C to 230°C.

The method may further comprise the steps of formulating the composition into granules. Accordingly, the method may further comprise the optional steps of:
v) forwarding the composite composition of step iv) through an extruder screw towards an extruder nozzle, forming an extruded strand of the composite composition
vi) cutting the extruded strand of the composite composition into granules of the composite composition

Step vi) may be carried out in a knife mill. According to some embodiments, the obtained granules of the composite composition may present a mean diameter ranging from 5 to 10 mm.

### Filament/ method for preparing the filament

As previously discussed, the invention relates to a composition as defined above, in the form of a filament suitable for 3D printing.

The invention further relates to the use of the composite composition according to the invention for the production of a filament suitable for 3D printing. The invention further relates to a method for preparing a filament suitable for 3D printing, comprising supplying a composite composition according to any one of the above embodiments, and extruding it into a filament suitable for 3D printing. According to some embodiments, the method for preparing a filament suitable for 3D printing comprises the steps of:
- supplying a composite composition according to the invention, typically in the form of granules of the composite composition that typically present a mean diameter ranging from 5 to 10 mm, then
- heating the composite composition while forwarding the composite composition through an extruder screw towards an extruder nozzle, forming an extruded filament, then
- optionally stretching the filament, then
- optionally reeling the filament into a filament coil.

The diameter of the filament can be determined on the basis of the type of impression and easily determined by a person skilled in the art.

According to some embodiments, the extruded and optionally stretched filament is cooled under controlled cooling conditions. According to some embodiments, the extruded and optionally stretched filament is cooled by applying a temperature ramp ranging from 240°C/min to 70°C/min. For instance, control cooling can be applied from the extruder temperature (~250°C) to the softening temperature (~170°C) in 30 seconds to 1 minute in a 3-5 m furnace wherein the filament is forwarded at the extrusion speed (at a speed ranging from 6 to 10m/min).

In one embodiment, the filament presents a diameter from about 1 to about 3 mm. In one embodiment, the diameter ranges from about 1.75 to about 2.75 mm. In one embodiment, the diameter is 1.50 mm. In one embodiment, the diameter is 2.05 mm. According to one embodiment, the diameter of the filament is measured by an electronic slide gauge, preferably the electronic slide gauge is the RS Pro^{®} electronic digital caliper 150 mm/6.

In one embodiment, the diameter of the filament is regular throughout its length.

Furthermore, the advantageous mechanical properties of the filament do not restrain its length.

In one embodiment, the filament presents a length from about 1 to about 3000 m. In one embodiment, the filament length ranges from about 40 to about 1500 m. In one embodiment, the filament length ranges from about 80 to about 1200 m. In one embodiment, the filament length ranges from about 90 to about 1100 m.

In one embodiment, the filament is easy to flexible and not easy to break. In one embodiment, the filament has a shore A hardness of at least 85, at least 90 or at least 100 at 20°C. According to one embodiment, the filament has a radius curvature of breaking ranging from more than 0 to 7 cm, preferably from more than 0 to 5 cm, more preferably from 2 cm to 5 cm. According to one embodiment, the filament has a radius curvature of breaking ranging from 2 cm to 7 cm. According to one embodiment, the filament has a radius curvature of breaking of about 1 cm, 2 cm, 3 cm, 4 cm, 5 cm, 6 cm or 7 cm. According to one embodiment, the radius curvature of breaking is determined by the methods and devices well-known by the skilled artisan.

According to one embodiment, the filament has a crushing resistance ranging from 20 MPa to 50 MPa, preferably from 25MPa to 40 MPa. According to one embodiment, the filament has a crushing resistance higher than 40MPa. According to one embodiment, the crushing resistance is determined by the methods and devices well-known by the skilled artisan.

Advantageously, when the filament has a crushing resistance of 40MPa or higher, an object may be printed from the filament of the invention with a printing outlet having a mean diameter of 0.2 mm or 0.4 mm. Advantageously, when the filament has a crushing resistance ranging from 20 MPa to 40 MPa, an object may be printed from the filament of the invention with a printing outlet having a mean diameter of 0.8 mm or 0.6 mm.

Advantageously, the filament is not porous. According to some embodiments, the porosity is less than 10%, preferably less than 5%. Advantageously, the porosity is less than 2%.

Advantageously, the filament presents a dielectric permittivity (εᵣ) of more than 7.0, of more than 7.5, of more than 8.0, of more than 8.5, of more than 9.0; of more than 9.5, of more than 10.0 or more than 11.0 in the frequency range of 10 to 50 GHz; and/or the filament presents a dielectric loss, or loss of tangent, (tgδ) of less or equal to 0.02, of less or equal to 0.01, of less or equal to 0.005, or of less or equal to 0.001 in the frequency range of 10 to 50 GHz.

Advantageously, the filament is flexible and can be coiled. Thus, the invention also relates to a coil comprising at least one composition in the form of filament according to the invention.

In one embodiment, the coil has a weigh ranging from 100 g to 3 kg. In one embodiment, the coil has a weigh ranging from 300 g to 2.5 kg. In one embodiment, the coil has a weigh ranging from 400 g to 2.5 kg. In one embodiment, the coil has a weigh ranging from 500 g to 2 kg.

The invention also relates to a device implementing the filament or the filament coil according to the invention. In one embodiment, the device is a 3D printer, preferably a FDM type or FFF type 3D printer.

### Printing method

The invention also relates to the use of a composite composition according to or a filament comprising thereof for printing a composite shaped body. The invention further refers to a method for producing a shaped body, namely for the printing of a 3D object.

The method comprises the following steps:
a) Feeding a 3D modeling printer, preferably a Fused Deposition Modeling printer or a Fused Filament Fabrication printer, with at least one filament of the present invention; then
b) Printing the shaped body.

### Shaped object

The invention also relates to a composite shaped body comprising the composite composition according to the invention. In one embodiment, the composite shaped body is a printed shaped composite body. In one embodiment, the composite shaped body is obtainable according to the hereinabove described method for producing a composite shaped body.

Advantageously, the composite shaped body presents a dielectric permittivity (εᵣ) of more than 7.0, of more than 7.5, of more than 8.0, of more than 8.5, of more than 9.0, or of more than 9.5, or of more than 10 , or of more than 11 in the frequency range of 10 to 50 GHz; and/or the shaped body presents a dielectric loss, or loss of tangent, (tgδ) of less or equal to 0.02, of less or equal to 0.01, of less or equal to 0.005, or of less or equal to 0.001 in the frequency range of 10 to 50 GHz.

According to some embodiments, the composite shaped body presents a dielectric permittivity (εᵣ) of more than 9.0, and a dielectric loss, or loss of tangent, (tgδ) of less or equal to 0.001 in the frequency range of 10 to 50 GHz.

The present invention allows the 3D printing of a composite shaped body whose dimensions are more than 90 mm. By dimensions is meant the average of the 3D dimensions or the dimension presenting the highest numerical value.

According to some embodiments, the dimensions of the composite shaped body are more than 90 m, more than 150 mm, more than 200 mm, more than 300 mm, or more than 500 mm. According to some embodiments, the length of the composite shaped body is more than 90 m, more than 150 mm, more than 200 mm, more than 300 mm, or more than 500 mm. According to some embodiments, the width of the composite shaped body is more than 90 m, more than 150 mm, more than 200 mm, more than 300 mm, or more than 500 mm. According to some embodiments, the dimensions of the composite shaped body are about 600 mm. According to some embodiments, the dimensions of the composite shaped body are about 600 mm. According to some embodiments, the length of the composite shaped body is about 430 mm and the with about 280 mm. Advantageously, the printing of a composite material according to the invention allows a precision of the composite shaped body of 0.1 mm.

Advantageously, the composite shaped body is resistant to a range of temperatures from -55°C 50 +85°C.

According to some embodiments, the composite shaped body is an element of high-frequency devices. According to some embodiments, the composite shaped body is or comprises a dielectric wave guide, a Ku band antenna, a Ka band antenna, a power splitter, a feeding structure for dielectric antenna arrays, a phase shifter, a dielectric lens antenna, a chip-to-chip interconnect, or any other high frequency device. According to some embodiments, the composite shaped body is or comprises a Ku band antenna element or Ka band antenna element.

### EXAMPLES

The present invention is further illustrated by the following examples.

### Example 1: Preparation of the inorganic filler

100 kg of P25 TiO2 (Aeroxide^{®} SAFIC-ALCAN) were suspended in water (1:10 by volume) comprising 0.5 wt.% Dolapix^{®} CE64 binder and were spray dried, yielding 92 kg of TiO₂ microspheres of an average diameter ranging from 20 to 50 µm. The microspheres were dried and subjected to sintering by heating the TiO₂ microspheres at 150°C for 5 hours, further raising the temperature at a rate of 200°C/hour up to 900°C, maintaining the temperature at 900°C for 10h and cooling to room temperature. The DRX spectrum of the obtained microspheres (87 kg) confirmed the presence of 100% rutile TiO₂.

The spray-dried and sintered microspheres ball-milled to break any aggregates and sieved so as to exclude, eventual aggregates larger than 250 µm.

### Example 2: Preparation of composite compositions

The following compositions were prepared using the inorganic filler composition of Example 1, TOPAS^{®} poly-ethylene-norbornene (COC) and SCONA^{®} TSKD 9103 styrene-ethylene-butadiene-styrene (SEBS).

The composite compositions of table 1 were prepared by heating to 230°C and mixing the COC and SEBS in a sigma-blade blender and dispersing therein the dielectric inorganic filler composition of Example 1 into the mix of COC and SEBS.

**Table 1 Composite compositions according to example 2**

| Wt.% by the composite composition | **C1** | **C2** | **C3** | **C4** | **C5** | **C6** | **C7** |
|---|---|---|---|---|---|---|---|
| Rutile TiO₂ | 70% | 72 % | 74 % | 76 % | 78 % | 80% | 82 % |
| COC | 20 | 18.6 | 17.5 | 16 | 14 | 12 | 9 |
| SEBS | 10 | 9.4 | 8.5 | 8 | 8 | 8 | 9 |

### Example 3: Filament preparation

Compositions C1-C7 were granulated into granules of 5-10 µm by forwarding the composite compositions of Example 2through an extruder screw towards an extruder nozzle, forming an extruded strand of the composite composition. The extruded strand of the composite compositions was cut with a knife mill into granules of the composite composition presenting a mean diameter ranging from 5 to 10 mm.

The granules of the composite compositions C1-C7 were extruded into filaments F1-F7 of 1.75mm respectively as follows.

The granules of the composite compositions were fed independently in a preheated extruder, gradually heated to 290°C while forwarded through the extruder screw towards the extruder nozzle, forming an extruded filament, that was maintained at 100°C for at about 400 cm after the nozzle, prior to the stretching of the filament.

The obtained filaments were flexible, presented and did not break and presented a regular diameter of 1.74 to 1.76 mm throughout their length.

### Example 4: Dielectric properties

Compositions C1-C7 were used to prepare molded objects (50 mm x 50 mm x 1mm) were prepared by an Arbug type injection molding.

Filaments F1 and F3 were used to 3D print plaques (25 mm x 25 mm x 1mm) O1 and O3 respectively.

The dielectric properties of the molded objects with compositions C1-C7 and the filaments F1-F7 and the 3D printed plaques O1 and O3 were measured according with the rectangular waveguide cavity method at frequency of 9.4 GHz. The results are presented in table 2

**Table 2 Dielectric properties of the molded Composite compositions according to example 2, the filaments obtained thereof and 3D printed objects. NA: not available**

| **Molded objects** | **C1** | **C2** | **C3** | **C4** | **C5** | **C6** | **C7** |
|---|---|---|---|---|---|---|---|
| Permittivity | 6.92 | 8.16 | 8.92 | 9.21 | 10.31 | 11.99 | 13.32 |
| Loss of tangent (10⁻³) | 1.2 | 1.4 | 1.5 | 1.7 | 2.1 | 2.8 | 3.4 |

| **Filaments** | **F1** | **F2** | **F3** | **F4** | **F5** | **F6** | **F7** |
|---|---|---|---|---|---|---|---|
| Permittivity | 6.25 | 7.45 | 8.23 | 8.83 | 9.02 | 10.12 | 11.14 |
| Loss of tangent (10⁻³) | 1.0 | 1.1 | 1.0 | 1.1 | 1.5 | 1.7 | 2.1 |

| **3D printed objects** | **O1** | | **O3** | | | | |
|---|---|---|---|---|---|---|---|
| Permittivity | 6.12 | NA | 8.05 | NA | NA | NA | NA |
| Loss of tangent (10⁻³) | NA | NA | NA | NA | NA | NA | NA |

As expected, the permittivity of the obtained objects positively correlated with the amount of the dielectric mineral charge of the used composite composition.

The composite composition according to the present inventive therefore allows the obtention of dielectric composite objects. Furthermore, the present composition can be extruded into filaments that are compliant with a use in 3D printing in terms of mechanical properties.

As presented in table 2 such filaments are advantageous with regard to presenting an elevated permittivity while presenting a reduced loss of tangent. Lastly, 3D printed objects with a filament according to the invention presented present the necessary dielectric properties for high-frequency applications.

## Claims

1. A composite composition suitable for 3D printing, said composition comprising at least one cyclic Olefin Copolymer (COC), at least one styrenic block copolymer, and a dielectric inorganic filler composition in an amount of more than 30% by weight relative to the total weight of the composite composition.

2. The composite composition according to claim **1,** wherein the dielectric inorganic filler composition comprises TiO₂, rutile TiO₂, SrTiO₃, BaTiO₃, BaSrTiO₃, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ polymorphs thereof and mixtures thereof.

3. The composite composition according to claim **1** or claim **2,** wherein the dielectric inorganic filler composition comprises or consists of rutile TiO₂ or SrTiO₃.

4. The composite composition according to any one of claims **1** to **3,** wherein the dielectric inorganic filler consists of rutile TiO₂ or SrTiO₃ microspheres presenting an average diameter ranging from 20 to 50 µm.

5. The composite composition according to any one of claims **1** to **4,** wherein the cyclic olefin copolymer is a copolymer of C2 to C12 linear or branched alpha-olefins and a cyclic olefin, wherein the linear or branched alpha-olefins are selected from the group consisting of ethylene, propylene, butene, pentene, hexene, heptene, octene, nonene, decene, undecene, dodecene and isomers thereof; and/ or wherein the cyclic olefin is selected from the group consisting of norbornene, norbornadiene, dicyclopentadiene, cyclopentene, cycloheptene, cyclooctene, cyclooctadiene, cyclododecene, 7-oxanorbomene, 7-oxanorbomadiene, substituted derivatives thereof, and isomers thereof, such as 1,5-cyclooctadiene, 1-hydroxy-4-cyclooctene, 1-acetoxy-4-cyclooctene, 5-methylcyclopentene.

6. The composite composition according any one of claims **1** to **5,** wherein the at least one styrenic block copolymer is selected from the group consisting of styrene-ethylene-butadiene-styrene (SEBS), styrene-butadiene (SB), styrene-isoprene (SI), styrene-isoprene-styrene (SIS), styrene-butadiene-styrene (SBS), styrene-isoprene-butadiene (SIB), or styrene-isoprene-butadiene-styrene (SIBS) styrene-ethylene-propylene-styrene block copolymer (SEPS) and mixtures thereof.

7. The composite composition according to any one of claims **1** to **6,** wherein the cyclic olefin copolymer is poly-ethylene-norbornene and/or wherein the at least one styrenic block copolymer is styrene-ethylene-butadiene-styrene.

8. The composite composition according any one of claims **1** to **7,** said composition comprising by weight of the total weight of the composite composition:
- from 10 to 35 % of poly-ethylene-norbornene,
- from 5 to 25 wt.% of styrene-ethylene-butadiene-styrene, and
- at least 60 wt.% rutile TiO₂ or SrTiO₃.

9. The composite composition according any one of claims **1** to **8,** said composition comprising by weight of the composite composition:
- from 15 to 20 % of poly-ethylene-norbornene,
- from 5 to 15 wt.% of styrene-ethylene-butadiene-styrene, and
- at least 70 wt.% rutile TiO₂ or SrTiO₃ microspheres presenting an average diameter ranging from 20 to 50 µm.

10. The composite composition according any one of claims **1** to **9,** wherein the mass ratio of the cyclic olefin copolymer (COC) to the at least one styrenic block copolymer ranges from 2:1 to 1:1.

11. Use of a composite composition according to any one of claims **1** to **10** for the fabrication of filament for 3D printing.

12. A filament coil, wherein the filament comprises the composite composition according to any one of claims **1** to **10.**

13. Use of a composite composition according to any one of claims **1** to **10** or a filament comprising thereof for printing a composite shaped body.

14. A composite shaped body comprising the composite composition according to any one of claims **1** to **10.**

15. The composite shaped body according to claim **14,** presenting a dielectric permittivity (εr) of more than 7.0 and/or a dielectric loss of less or equal to 0.02.

## Patentansprüche

1. Verbundstoffzusammensetzung, die für 3D-Druck geeignet ist, wobei die Zusammensetzung mindestens ein Cycloolefin-Copolymer (COC), mindestens ein Styrol-Blockcopolymer, und eine dielektrische anorganische Füllstoffzusammensetzung in einer Menge von mehr als 30 Gewichts-%, auf das Gesamtgewicht der Verbundstoffzusammensetzung bezogen, umfasst.

2. Verbundstoffzusammensetzung nach Anspruch **1,** wobei die dielektrische anorganische Füllstoffzusammensetzung TiO₂, Rutil-TiO₂, SrTiO₃, BaTiO₃, BaSrTiO3, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ und/oder ZnZrO₃, Polymorphe davon und Gemische davon umfasst.

3. Verbundstoffzusammensetzung nach Anspruch **1** oder Anspruch **2,** wobei die dielektrische anorganische Füllstoffzusammensetzung Rutil-TiO₂ oder SrTiO₃ umfasst oder daraus besteht.

4. Verbundstoffzusammensetzung nach einem der Ansprüche **1** bis **3,** wobei der dielektrische anorganische Füllstoff aus Rutil-TiO₂- oder SrTiO₃-Mikrokugeln besteht, die einen mittleren Durchmesser im Bereich von 20 bis 50 µm aufweisen.

5. Verbundstoffzusammensetzung nach einem der Ansprüche **1** bis **4,** wobei das Cycloolefin-Copolymer ein Copolymer von linearen oder verzweigten C2- bis C12-Alpha-Olefinen und einem Cycloolefin ist, wobei die linearen oder verzweigten Alpha-Olefine ausgewählt sind aus der Gruppe bestehend aus Ethylen, Propylen, Buten, Penten, Hexen, Hepten, Octen, Nonen, Decen, Undecen, Dodecen und Isomeren davon; und/oder wobei das Cycloolefin ausgewählt ist aus der Gruppe bestehend aus Norbornen, Norbornadien, Dicyclopentadien, Cyclopenten, Cyclohepten, Cycloocten, Cyclooctadien, Cyclododecen, 7-Oxanorbomen, 7-Oxanorbomadien, substituierten Derivaten davon und Isomeren davon, wie etwa 1,5-Cyclooctadien, 1-Hydroxy-4-cycloocten, 1-Acetoxy-4-cycloocten, 5-Methylcyclopenten.

6. Verbundstoffzusammensetzung nach einem der Ansprüche **1** bis **5,** wobei das mindestens eine Styrol-Blockcopolymer ausgewählt ist aus der Gruppe bestehend aus Styrol-Ethylen-Butadien-Styrol (SEBS), Styrol-Butadien (SB), Styrol-Isopren (SI), Styrol-Isopren-Styrol (SIS), Styrol-Butadien-Styrol (SBS), Styrol-Isopren-Butadien (SIB) oder Styrol-Isopren-Butadien-Styrol (SIBS), Styrol-Ethylen-Propylen-Styrol-Blockcopolymer (SEPS) und Gemischen davon.

7. Verbundstoffzusammensetzung nach einem der Ansprüche **1** bis **6,** wobei das Cycloolefin-Copolymer Poly-Ethylen-Norbornen ist, und/oder wobei das mindestens eine Styrol-Blockcopolymer Styrol-Ethylen-Butadien-Styrol ist.

8. Verbundstoffzusammensetzung nach einem der Ansprüche **1** bis **7,** wobei die Zusammensetzung, auf das Gesamtgewicht der Verbundstoffzusammensetzung bezogen, umfasst:
- 10 bis 35 % Poly-Ethylen-Norbornen,
- 5 bis 25 Gew.-% Styrol-Ethylen-Butadien-Styrol, und
- mindestens 60 Gew.-% Rutil-TiO₂ oder SrTiO₃.

9. Verbundstoffzusammensetzung nach einem der Ansprüche **1** bis **8,** wobei die Zusammensetzung, auf das Gewicht der Verbundstoffzusammensetzung bezogen, umfasst:
- 15 bis 20 % Poly-Ethylen-Norbornen,
- 5 bis 15 Gew.-% Styrol-Ethylen-Butadien-Styrol, und
- mindestens 70 Gew.-% Rutil-TiO₂- oder SrTiO₃-Mikrokugeln, die einen mittleren Durchmesser im Bereich von 20 bis 50 µm aufweisen.

10. Verbundstoffzusammensetzung nach einem der Ansprüche **1** bis **9,** wobei das Massenverhältnis des Cycloolefin-Copolymers (COC) zu dem mindestens einen Styrol-Blockcopolymer im Bereich von 2:1 bis 1:1 liegt.

11. Verwendung einer Verbundstoffzusammensetzung nach einem der Ansprüche **1** bis **10** zur Herstellung eines Filaments für 3D-Druck.

12. Filamentspule, wobei das Filament die Verbundstoffzusammensetzung nach einem der Ansprüche **1** bis **10** umfasst.

13. Verwendung einer Verbundstoffzusammensetzung nach einem der Ansprüche **1** bis **10** oder eines Filaments, das diese umfasst, zum Drucken eines Verbundformkörpers.

14. Verbundformkörper, der die Verbundstoffzusammensetzung nach einem der Ansprüche **1** bis **10** umfasst.

15. Verbundformkörper nach Anspruch **14,** der eine Dielektrizitätskonstante (εr) von mehr als 7,0 und/oder einen dielektrischen Verlust von kleiner oder gleich 0,02 aufweist.

## Revendications

1. Composition composite adaptée à l'impression 3D, ladite composition comprenant au moins un copolymère d'oléfine cyclique (COC), au moins un copolymère block styrénique et une composition de charge inorganique diélectrique en une quantité supérieure à 30 % en poids par rapport au poids total de la composition composite.

2. Composition composite selon la revendication 1, dans laquelle la composition de charge inorganique diélectrique comprend TiO₂, rutile TiO₂, SrTiO₃, BaTiO₃, BaSrTiO₃, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ et/ou ZnZrO₃ leurs polymorphes et leurs mélanges.

3. Composition composite selon la revendication 1 ou la revendication 2, dans laquelle la composition de charge inorganique diélectrique comprend ou est constituée de rutile TiO₂ ou SrTiO₃.

4. Composition composite selon l'une quelconque des revendications 1 à 3, dans laquelle la charge inorganique diélectrique est constituée de microsphères de rutile TiO₂ ou SrTiO₃ présentant un diamètre moyen allant de 20 à 50 µm.

5. Composition composite selon l'une quelconque des revendications 1 à 4, dans laquelle le copolymère d'oléfine cyclique est un copolymère d'alpha-oléfines C2 à C12 linéaire ou ramifié et une oléfine cyclique,
dans laquelle les alpha-oléfines linéaires ou ramifiées sont choisies dans le groupe constitué par l'éthylène, le propylène, le butène, le pentène, l'hexène, l'heptène, l'octène, le nonène, le décène, l'undécène, le dodécène et leurs isomères ; et/ou
dans laquelle l'oléfine cyclique est choisie dans le groupe constitué par le norbornène, le norbornadiène, le dicyclopentadiène, le cyclopentène, le cycloheptène, le cyclooctène, le cyclooctadiène, le cyclododécène, le 7-oxanorbomène, le 7-oxanorbomadiène, leurs dérivés substitués et leurs isomères, tels que le 1,5-cyclooctadiène, le 1-hydroxy-4-cyclooctène, le 1-acétoxy-4-cyclooctène, le 5-méthylcyclopentène.

6. Composition composite selon l'une quelconque des revendications 1 à 5, dans laquelle le au moins un copolymère block styrénique est choisi dans le groupe constitué par le styrène-éthylène-butadiène-styrène (SEBS), le styrène-butadiène (SB), le styrène-isoprène (SI), le styrène-isoprène-styrène (SIS), le styrène-butadiène-styrène (SBS), le styrène-isoprène-butadiène (SIB) ou le styrène-isoprène-butadiène-styrène (SIBS), le copolymère block styrène-éthylène-propylène-styrène (SEPS) et leurs mélanges.

7. Composition composite selon l'une quelconque des revendications 1 à 6, dans laquelle le copolymère d'oléfine cyclique est du polyéthylène-norbornène et/ou dans laquelle le au moins un copolymère block styrénique est du styrène-éthylène-butadiène-styrène.

8. Composition composite selon l'une quelconque des revendications 1 à 7, ladite composition comprenant en poids du poids total de la composition composite :
- de 10 à 35 % de polyéthylène-norbornène,
- de 5 à 25 % en poids de styrène-éthylène-butadiène-styrène, et
- au moins 60 % en poids de rutile TiO₂ ou SrTiO₃.

9. Composition composite selon l'une quelconque des revendications 1 à 8, ladite composition comprenant en poids de la composition composite :
- de 15 à 20 % de polyéthylène-norbornène,
- de 5 à 15 % en poids de styrène-éthylène-butadiène-styrène, et
- au moins 70 % en poids de microsphères de rutile TiO₂ ou SrTiO₃ présentant un diamètre moyen allant de 20 et 50 µm.

10. Composition composite selon l'une quelconque des revendications 1 à 9, dans laquelle le rapport massique du copolymère d'oléfine cyclique (COC) par rapport à le au moins un copolymère block styrénique varie de 2:1 à 1:1.

11. Utilisation d'une composition composite selon l'une quelconque des revendications 1 à 10 pour la fabrication de filament pour l'impression 3D.

12. Bobine de filament, dans laquelle le filament comprend la composition composite selon l'une quelconque des revendications 1 à 10.

13. Utilisation d'une composition composite selon l'une quelconque des revendications 1 à 10 ou d'un filament la comprenant pour imprimer un corps composite façonné.

14. Corps composite façonné comprenant la composition composite selon l'une quelconque des revendications 1 à 10.

15. Corps composite façonné selon la revendication 14, présentant une permittivité diélectrique (εr) supérieure à 7,0 et/ou une perte diélectrique inférieure ou égale à 0,02.
